# EUROPEAN PATENT APPLICATION

(11) **EP 2 489 705 A1**
(43) Date of publication of application: **22.08.2012**
(21) Application number: 12156116.1
(22) Date of filing: 20.02.2012
(51) Int. Cl.: C09D 5/18, C09K 21/02, C08K 3/26

(54) **Production method for polymer paint with non-flammable property**

(30) Priority: 21.02.2011 TR 201101673
(71) Applicant: Vestel Elektronik Sanayi ve Ticaret A.S., 45030 Manisa (TR)
(72) Inventor: Celik, Erdal, 35160 Izmir (TR); Atay, Husnugul Yilmaz, 35160 Izmir (TR); Nil, Metin, 45030 Manisa (TR)
(74) Representative: Cayli, Hülya

(57) **Abstract**

The production method for non-flammable polymer paint, developed by the present invention, involves the steps of grinding a huntite and hydromagnesite mixture to nanometric sizes; obtaining a non-flammable material by mixing the ground huntite ve hydromagnesite mixture with the ground boric acid and/or antimony oxide mixture; and addition of the non-flammable material to the polymer paint by continuous mechanical stirring. Application of the paint produced may extend the time to ignition of the polymer material up to 60%. Hence the dangers that polymer materials pose when temperature is raised are reduced.

## Description

### Related Technical Field

The present invention is related to the production of a paint having non-flammable property.

### Prior Art

In many of the articles used in daily life, polymer-based materials are preferred for reasons such as cost, strength, ease of productions. Polymer-based materials, which are also known as plastics, are carbon compounds and can easily be processed because of their plastic properties. In addition, the structural strength of such materials can be adjusted at the desired levels.

However, combustion resistance of these polymer-based materials is very limited. Since polymers are compounds that contain high levels of carbon, hydrogen and oxygen, they burn easily and rapidly. Combustion of polymers progress 4 times more rapidly than that of wood. During the combustion of polymers toxic and combustible gases are released together with heat. Moreover, the medium becomes more combustible when polymer chains break into smaller parts or molecules through the impact of heat. For example, during the combustion of polypropylene the propane gas, which is more combustible than polypropylene, is released. The spread of combustion depends on the severity of the combustion and the response of the polymer to this. In order that the polymer has a natural combustion resistance, it is necessary that there is high level of carbonization at lower temperatures, that is has heat stability above 400 °C (high melting temperature), and that the decomposition products formed below 400 °C are non-combustible gases (CO₂, HCl, H₂O etc.)

Upon the rise of the ambient temperature above the normal level, the polymer materials first lose their form, and in the next stage they easily burst into flames as their chemical structures are affected. The polymers, which are rich in carbon, rapidly burn once they catch fire and cause the fire that has formed grow rapidly. Also, upon the start of the combustion of the carbonaceous structure of the polymer, toxic gases such as carbon monoxide and carbon dioxide are released into the atmosphere at high levels. Even if the combustion of the material is prevented, release of such toxic gases may effect the composition of the ambient air critically, causing intoxication and deaths.

To prevent the mentioned dangers, these materials must be given fire-proof or non-flammable properties. Such properties can be provided by mixing the materials with non-flammable materials. However, the content of the materials may affect the mechanical and basic chemical properties of the material. Thus, to maintain or to restore the desired mechanical and chemical properties in the material, additional processes and additional materials must be used.

In the prior art, often halogens are used as additives to retard combustion. Halogens form heavy gases during combustion, which gases prevent combustion by preventing contact of the material with oxygen. However, use of halogens is not preferred due to their damage to the environment.

In the patent document no. KR 20090097284 A, a fireproof material mixed with huntite/hydromagnesite is disclosed. The huntite/hydromagnesite mixture is a material which can mix with polymer materials, which is not easily flammable unlike known polymers, which on the contrary in virtue of its structure that changes when the ambient temperature increases can retard the combustion of the material into which it has been mixed. Thus, the material's time to ignition is extended and a non-flammable property is rendered.

In the patent document no. JP 9048899 A, a rubber material manufactured by adding boric acid and antimony oxide into it is disclosed. With the mentioned mixing process, the rubber is rendered fireproof. Furthermore, the mentioned mixing gives the material antibacterial and antifungal properties.

### Brief Description of the Invention

The production method for non-flammable polymer paint, developed by the present invention, involves the steps of grinding a huntite and hydromagnesite mixture to nanometric sizes; obtaining a non-flammable material by mixing the ground huntite ve hydromagnesite mixture with the ground boric acid and/or antimony oxide mixture; and addition of the non-flammable material to the polymer paint by continuous mechanical stirring.

The polymer paint manufactured with the developed method may be used in painting polymer materials and may extend the time to ignition of the polymer materials up to 60%. Hence, the risk of polymer materials and articles produced from these materials to catch flame is decreased.

### Object of the Invention

The object of the present invention is to provide a polymer paint production method.

A further object of the present invention is to provide a non-flammable polymer paint production method.

Another object of the present invention is to provide a production method for a polymer paint with good surface adhesion property.

Another object of the present invention is to provide a production method for a polymer paint that allows the formation of a smooth surface.

### Description of Figures

Application examples of the polymer paint production method developed with the present invention are illustrated in the attached figures:
Figure 1; is the scanning electron microscopy image of a polymer paint manufactured by the developed method.
Figure 2; is the scanning electron microscopy image of another polymer paint manufactured by the developed method.
Figure 3; is the differential thermal analysis graph of pure plastic.
Figure 4; is the thermogravimetry graph of pure plastic.
Figure 5; is the differential thermal analysis graph of polymer based paint known in the art.
Figure 6; is the thermogravimetry graph of polymer based paint known in the art.
Figure 7; is the differential thermal analysis graph of a polymer based paint produced by the production method developed by the present invention.
Figure 8; is the thermogravimetry graph of a polymer based paint produced by the production method developed by the present invention.

### Detailed Description of the Invention

Polymer materials (plastics) used frequently in daily articles enhance the severity of the fire in a probable fire event since they easily burn and catch fire, and also pose a danger because of the toxic gases that are released during combustion. Thus, it is important to render such materials fireproof.

It is known from the prior art that mixing polymer materials with materials such as boric acid (H₃BO₃), antimony oxide (Sb₂O₃), huntite (Mg₃Ca(CO₃)₄) and hydromagnesite (Mg₄(CO₃)₃(OH)₂.3H₂O) provides non-flammable properties. These substances include hydroxide and the endothermic decomposition between 200 °C and 400 °C, releasing water vapour and carbon dioxide. The cooling effect of the reaction and the effect of the inert gases formed establish a ceramic-like layer on the burning surface. This layer protects the combustible surface against a future combustion and heat. However, since the mentioned mixture affects also the mechanical properties of the polymer material, it is not preferred.

The formula for boric acid is H₃BO₃. It is a odourless, tasteless, air-stable substance in the form of white crystals. Its molecular weight is 61.83, melting point is 169°C and boiling point is 300°C. iit has a specific weight of 1.46 g/cm³. Is heated up to 175°C, it loses water and becomes metaboric acid (HBO₂). If heated more, it is converted to tetraboric acid (H₂B₄O₇), and if heated even more it is converted to glassy boron trioxide. Boric acid is used in manufacture of heat resistant borosilicate glass and also in production of glass fibres. It may be used in protecting wooden material against air and to render fabrics flame resistant. Boric acid provides resistance to flame to cellulose materials. It removes the water molecules in cellulose before reaching the flash point an the coal formed covers the surface, preventing further burning.

Antimony is a silver-white, fragile, solid crystalline element with weak electric and heat conductance. Due to its advantages, metallic antimony is extensively used to make alloys with lead and other metals. Antimony trioxide is used as a white paint in plastics, metal coating, ceramics and enamels, and in the paint industry, and as a non-flammable in the textile, plastics and chemical industries.

Polymer paint manufacture is provided using the paint production method developed by the present invention. This method provides fireproof properties to the mentioned polymer paint, hence, providing fireproof or non-flammable property to the painted material.

The method developed includes the following stages:
Firstly, the huntite and hydromagnesite mixture is ground to particles preferably of 100 nanometre or less. Such grinding process provides homogenous and uniform blending of the non-flammable material and the paint. Reducing the material to nanometric sizes emphasizes the non-flammable property and inhibits the undesired properties (heterogeneity, reaction inefficiency). Then, the ground huntite and hydromagnesite mixture is preferably mixed with the boric acid and/or antimony oxide mixture that has been ground in the same way. In this mixture, the huntite and hydromagnesite mixture is preferably used between 1% to 50% by volume. Thus, a non-flammable material that contains huntite, hydromagnesite, boric acid and/or antimony is obtained.

The non-flammable material prepared is mixed with the polymer paint. During mixing, the paint and non-flammable material mixture is continuously agitated by mechanical means. Thus, the paint is rendered a homogenous structure. Preferably the ratio of the non-flammable material is %30 by volume.

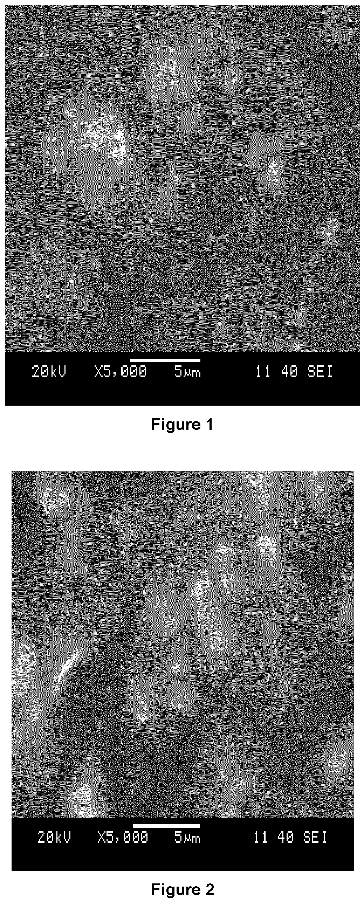

Figure 1 and figure 2 give the scanning electron microscopy image of a paint produced with the developed production method. It is observed that the polymer paint produced with the developed method has good wetting properties and a rough structure. Therefore, fire retardancy is provided to the paint, while preserving the desired properties.

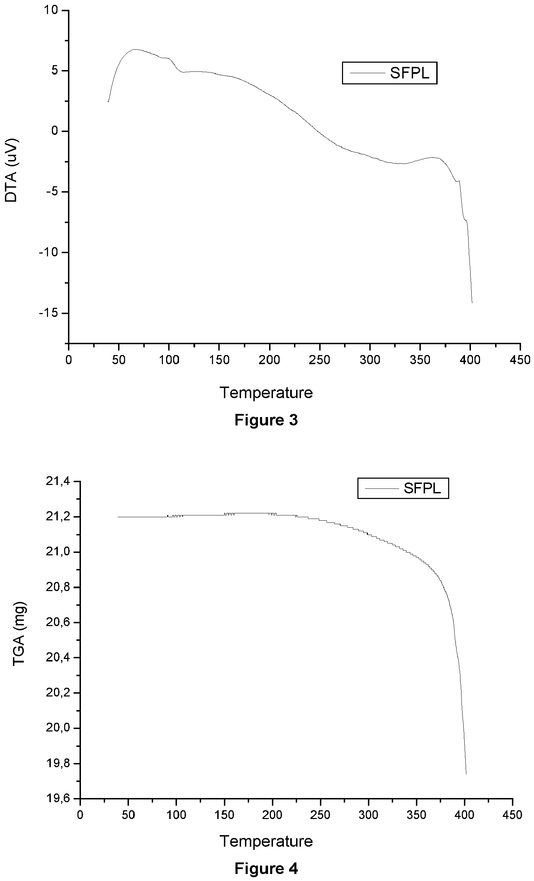

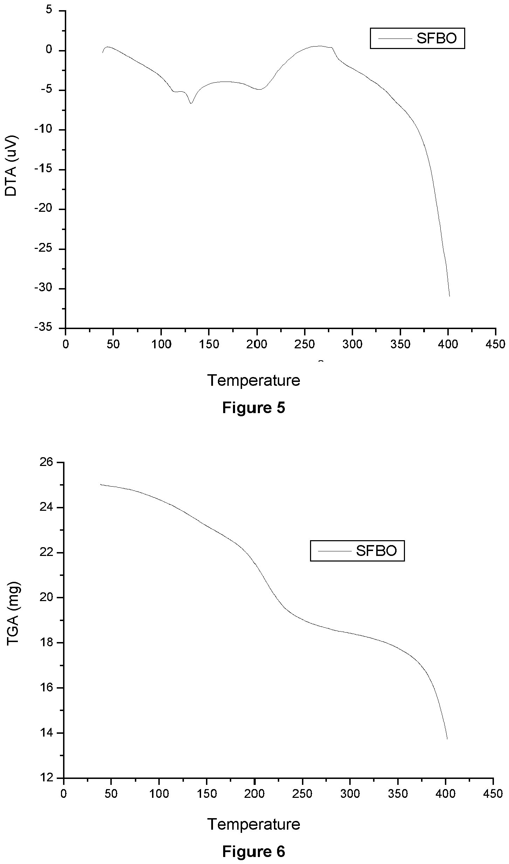

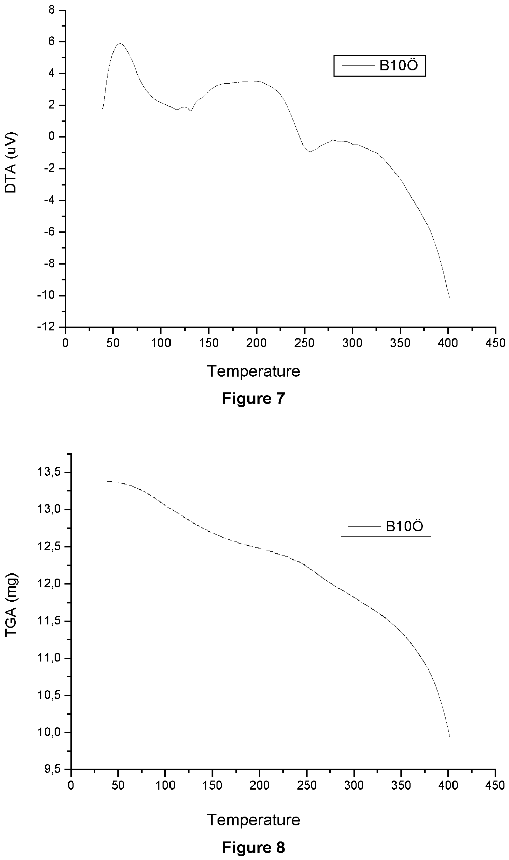

When the paint produced with the developed production method and pure polymer materials are subjected to differential thermal analysis and thermogravimetry tests, the results of which are given in Figure 3 - 8, it is observed that the paint produced by the developed production method catches fire much more later with respect to polymer based materials known in the art and with respect to pure polymer materials, and thus, that the paint confers non-flammable property to the material.

The non-flammable polymer paint produced with the abovementioned method may be applied to polymer materials by conventional means known in the art. This polymer paint obtained retards the burning of the material in virtue of the fireproof coating formed on the surface of the material. Application of the paint produced may extend the time to ignition of the polymer material up to 60%. Hence the dangers that polymer materials pose when temperature is raised are reduced.

## Claims

1. A method of non-flammable polymer paint production, **characterised in that** it comprises the steps of;
- grinding a huntite and hydromagnesite mixture to nanometric sizes;
- grinding boric acid and/or antimony oxide mixture to nanometric sizes;
- obtaining a non-flammable material by mixing the ground huntite ve hydromagnesite mixture with the ground boric acid and/or antimony oxide mixture;
- addition of the non-flammable material to the polymer paint by continuous mechanical stirring.

2. A method of non-flammable polymer paint production according to claim 1, **characterised by** involving the step of grinding the mixture to particles of 100 nanometre or less at the stage of grinding the huntite and hydromagnesite mixture.

3. A method of non-flammable polymer paint production according to claim 1, **characterised by** involving the step of grinding the boric acid and/or antimony oxide mixture to particles of 100 nanometre or less at the stage of grinding the boric acid and/or antimony oxide mixture to nanometric sizes.

4. A method of non-flammable polymer paint production according to claim 1, **characterised by** using the huntite and hydromagnesite mixture between 1% to 50% by volume at the step of mixing the huntite and hydromagnesite mixture with the ground boric acid and/or antimony oxide mixture.

5. A method of non-flammable polymer paint production according to claim 1, **characterised by** using the non-flammable material at a ratio of %30 by volume at the step of addition of the non-flammable material to the polymer paint by continuous mechanical stirring.
